# EUROPÄISCHE PATENTANMELDUNG

(11) **EP 1 780 519 A2**
(43) Veröffentlichungstag der Anmeldung: **02.05.2007**
(21) Anmeldenummer: 06022380.7
(22) Anmeldetag: 26.10.2006
(51) Int. Cl.: G01F 1/688

(54) **Mehrdimensionaler Fluidströmungssensor**

(30) Priorität: 28.10.2005 DE 102005051672
(71) Anmelder: Hydac Electronic GmbH, 66128 Saarbrücken (DE)
(72) Erfinder: Seidel, Helmut, Prof. Dr., 82319 Starnberg (DE); Schmid, Ulrich, Dr., 66125 Saarbrücken (DE)
(74) Vertreter: Bartels & Partner

(57) **Zusammenfassung**

Die Erfindung betrifft einen mehrdimensionalen Fluidströmungssensor (1) zum Ermitteln der Strömungsgeschwindigkeit eines Fluids in zwei oder mehr Raumrichtungen (6,8), wobei der Fluidströmungssensor (1) auf einer ersten Oberfläche (4) eines Substrats (2) mindestens ein Aktorelement (12), insbesondere ein elektrisches Heizelement, sowie mehrere auf der ersten Oberfläche (4) verteilt angeordnete und in Dünn- oder Dickschichttechnik auf dem Substrat aufgebrachte Sensorelemente (16a bis 16d), insbesondere Messwiderstände, aufweist, und wobei mindestens ein Teil der elektrischen Anschlüsse (12a,b) des Aktorelements (12) und/oder der Sensorelemente (16a bis 16d) über durch das Substrat (2) hindurchtretende und elektrisch leitfähige Durchkontaktierungen (14) von der ersten Oberfläche (4) zu Kontaktflächen (14a) auf einer zweite Oberfläche (10) des Substrats (2) durchkontaktiert ist.

## Beschreibung

Die Erfindung betrifft einen mehrdimensionalen Fluidströmungssensor zum Ermitteln der Strömungsgeschwindigkeit eines Fluids in zwei oder mehr Raumrichtungen.

Mehrdimensionale Fluidströmungssensoren sind aus dem Stand der Technik bekannt. Sie werden beispielsweise als Windsensoren in Windkraftanlagen eingesetzt, um die Richtung und Geschwindigkeit des Windes zu ermitteln. Dabei handelt es sich um hybrid aufgebaute Sensoren, was insoweit vorteilhaft ist, dass die Anordnung von Aktorelementen und Sensorelementen relativ einfach an den jeweiligen Anwendungsfall angepasst werden kann. Umgekehrt ist damit der Nachteil verbunden, dass bei größeren Stückzahlen die geforderte Reproduzierbarkeit der Sensorkennlinien bzw. die erforderliche Auswertung der elektrischen Signale und Umsetzung in Windrichtung und Windgeschwindigkeit enge Fertigungstoleranzen erfordert, die zu einem hohen Fertigungsaufwand führen. Weiterhin ist nachteilig, dass derartige Sensoren in rauen und aggressiven Umgebungsbedingungen nicht eingesetzt werden können oder jedenfalls einer aufwändigen Abschirmung bedürfen, die einen negativen Einfluss auf die gewünschte hohe Meßempfindlichkeit hat.

Der Erfindung liegt das Problem zugrunde, einen mehrdimensionalen Fluidströmungssensor bereitzustellen, welcher die Nachteile des Standes der Technik überwindet. Insbesondere soll der erfindungsgemäße Fluidströmungssensor auch in rauen Umgebungsbedingungen eine hohe Meßgenauigkeit gewährleisten und darüber hinaus vorzugsweise kostengünstig herstellbar sein. Auch bei einer Serienfertigung soll eine hohe Reproduzierbarkeit der Meßcharakteristik gewährleistet sein.

Die Erfindung ist durch den im Anspruch 1 bestimmten mehrdimensionalen Fluidströmungssensor gelöst. Besondere Ausführungsarten der Erfindung sind in den Unteransprüchen bestimmt.

Die Erfindung ist gelöst durch einen mehrdimensionalen Fluidströmungssensor zum Ermitteln der Strömungsgeschwindigkeit eines Fluids in zwei oder mehr Raumrichtungen, wobei der Fluidströmungssensor auf einer ersten Oberfläche eines Substrats mindestens ein Aktorelement, insbesondere ein elektrisches Heizelement, sowie mehrere auf der ersten Oberfläche verteilt angeordnete und in Dünn- oder Dickschichttechnik auf dem Substrat aufgebrachte Sensorelemente, insbesondere Messwiderstände, aufweist, und wobei mindestens ein Teil der elektrischen Anschlüsse des Aktorelements und/oder der Sensorelemente über durch das Substrat hindurchtretende und elektrisch leitfähige Durchkontaktierungen von der ersten Oberfläche zu Kontaktflächen auf einer zweite Oberfläche des Substrats durchkontaktiert ist.

Bei dem Fluid kann es sich insbesondere um eine Flüssigkeit oder ein Gas handeln, beispielsweise zur Übertragung von Druckkräften oder zur Einleitung in einen Reaktor, oder auch um ein Schmier- oder Kühlmittel.

Der Sensor kann dabei in einem Druckbereich von Hochvakuum bis Hochdruck eingesetzt werden, beispielsweise in einer Reaktionskammer mit Feinvakuum oder in einem Verbrennungsraum oder einem Einspritzsystem mit Spitzendrücken von bis zu mehr als 1000 bar, wobei die geometrischen Abmessungen an den jeweiligen Druckbereich angepasst sind, insbesondere das Verhältnis aus Fläche zu Dicke des Substrats. Bei dem Substrat kann es sich dabei um ein keramisches Substrat handeln, beispielsweise um ein Substrat aus einem Werkstoff bestehend aus Al2O3 in einer Matrix aus Glas, dessen Erweichungstemperatur geringer ist als der Schmelzpunkt von Al203, insbesondere um ein Substrat aus einem Werkstoff, der als LTCC (Low Temperature Cofired Ceramics) bezeichnet wird. Damit ist eine hohe thermische und/oder mechanische Belastung möglich und der Sensor kann auch in einer chemisch aggressiven Umgebung eingesetzt werden. Sofern ein weiterer Korrosionsschutz erforderlich ist, kann auf der Oberfläche des Substrats eine Passivierungsschicht aufgebracht werden, beispielsweise aus Si3N4 oder SiC.

Bei dem Aktorelement kann es sich um eine Widerstandsheizung handeln, beispielsweise eine Heizspirale oder einen Heizmäander, die auf die erste Oberfläche des Substrats aufgebracht ist, insbesondere in planarer Dick-oder Dünnschichttechnik aufgebracht ist, beispielsweise aufgedruckt ist. Alternativ oder ergänzend zu einer Widerstandsheizung können auch andere Aktorprinzipien realisiert werden, beispielsweise elektromagnetische, optische, akustische Aktoren oder dergleichen. Bei den Sensorelementen kann es sich ebenfalls um aufgedruckte Meßwiderstände handeln. Für die Herstellung des Aktorelements oder der Sensorelemente können dabei alle aus der Dünn- und Dickschichttechnik bekannten Verfahren eingesetzt werden, wobei für viele Anwendungsfälle das strukturierte Aufbringen beispielsweise in Siebdrucktechnik vorteilhaft ist. Grundsätzlich kommt aber auch ein ganzflächiges Auftragen der entsprechenden Schichten mit anschließender Schichtstrukturierung in Betracht.

Die Positionierung und Geometrie der Aktor- und Sensorelemente kann an den jeweiligen Anwendungsfall angepasst sein, insbesondere an den gewünschten Geschwindigkeitsbereich und/oder das Fluid. Entsprechendes gilt auch für die Geometrie und den Werkstoff des Substrates.

Für viele Anwendungsfälle wird ein Aktorelement je Sensor ausreichend sein, bei Bedarf können aber auch mehrere Aktorelemente vorgesehen sein. Die elektrischen Anschlüsse des Aktorelements oder der Sensorelemente sind mittels Durchkontaktierungen von der ersten Oberfläche weggeführt und können dadurch in einem zurückversetzten Bereich und gegebenenfalls unter weniger aggressiven Umgebungsbedingungen elektrisch kontaktiert werden. Hierzu sind vorzugsweise in Dickschichttechnik hergestellte bond- oder lötbare Kontaktpads vorgesehen, die auch von den Durchkontaktierungen selbst gebildet sein können. Die Strömungsgeschwindigkeit des Fluids wird in zwei oder mehr Raumrichtungen ermittelt, wobei die Raumrichtungen grundsätzlich einen beliebigen Winkel zueinander einschließen können. In einer Ausführungsart wird die Strömungsgeschwindigkeit in zwei oder auch in drei rechtwinklig zueinander stehenden Raumrichtungen ermittelt.

Durch die in Dick- oder Dünnschichttechnik ausgeführten Aktorelemente und Sensorelemente ergibt sich eine im wesentlichen planare erste Oberfläche des Substrats, durch die sowohl Verwirbelungen des Fluidstromes, welche die Meßgenauigkeit negativ beeinflussen können, als auch die Anhaftung von Partikeln vermieden werden. Außerdem kann einem Abscheren der aufgebrachten Schichten entgegengewirkt werden. Tendenziell gilt, dass je höher die Strömungsgeschwindigkeit sein kann, desto geringer sollte die Topographie auf der Oberfläche des Substrats sein. Erforderlichenfalls können auf die erste Oberfläche noch Passivierungsschichten aufgebracht werden, beispielsweise können durch Kathodenzerstäubung (Sputtern) oder Abscheidung aus der Gasphase (CVD, Chemical Vapour Deposition) geeignete Passivierungsschichten wie Siliziumoxid, Siliziumnitrid oder Siliziumkarbid aufgebracht werden. Eine Dickschichtpassivierung beispielsweise durch geeignete Gläser ist ebenfalls möglich.

In einer Ausführungsart sind die Durchkontaktierungen fluiddicht und verhindern dadurch einen Durchtritt des Fluids auf die der ersten Oberfläche in der Regel gegenüberliegende zweite Oberfläche des Substrats. Die beiden Oberflächen können dabei planparallel sein. Die Durchkontaktierungen können in Dickschichttechnik hergestellt sein. Beispielsweise können in das Substrat zunächst Durchgangsöffnungen eingebracht werden, insbesondere in einem rechten Winkel in Bezug auf die erste Oberfläche, und die Durchgangsöffnungen werden anschließend mit einer elektrisch leitfähigen Paste aufgefüllt, die in einem anschließenden Trocknungs- oder Brennvorgang aushärtet und dabei das Durchgangsloch fluiddicht verschließt. Auf diese Weise können Durchkontaktierungen hergestellt werden, die bis zu Druckdifferenzen von mehr als 1000 bar das Durchgangsloch fluiddicht und elektrisch leitfähig verschließen.

In einer Ausführungsart sind die Durckontaktierungen nahe oder an der Randlinie des Substrats angeordnet. Auf diese Weise können erforderlichenfalls große Abstände zwischen den einzelnen Durchkontaktierungen vorgesehen sein. Insbesondere können die Durchkontaktierungen gleichverteilt entlang der Randlinie angeordnet sein.

In einer Ausführungsart sind die Versorgungs- und Verbindungsleitungen, die das Aktorelement und/oder die Sensorelemente mit den zugeordneten Durchkontaktierungen elektrisch verbinden, in einer Zwischenlage des Substrats vorgesehen. Das Substrat ist in einem Vorbereitungszustand mehrlagig und insbesondere aus mindestens zwei Lagen, Folien oder Tapes gebildet, die einfach zu bearbeiten sind, insbesondere geschnitten oder gestanzt werden, etwa für die Öffnungen der Durchkontaktierungen. Auf mindestens einen Teil dieser Lagen werden Versorgungs- und Verbindungsleitungen aufgebracht, vorzugsweise in Dickschichttechnik, insbesondere aufgedruckt. Auf diese Weise ist es möglich, die aus dem Stand der Technik bekannten Bonddrähte, Drahtanschlüsse und dergleichen auf der ersten Oberfläche des Substrats vollständig zu vermeiden. Außerdem können erforderlichenfalls auch weitere passive Bauelemente in Dünn- oder vorallem in Dickschichttechnik auf den einzelnen Lagen aufgebracht werden, so dass beispielsweise Widerstände, Spulen und/oder Kondensatoren in das Substrat integriert werden können. Dort ist ein optimaler Schutz gegen Korrosion gewährleistet. Die verwendeten Werkstoffe für die Bauelemente können einen Glasanteil enthalten zur Erhöhung der Haftung auf der jeweiligen Lage.

In einer Ausführungsart sind die Sensorelemente auf der ersten Oberfläche um das Aktorelement herum angeordnet, insbesondere mit gleichem Winkelabstand oder mit ungleichem, aber regelmäßigem Winkelabstand um das Aktorelement herum angeordnet. Das Aktorelement kann dabei in einem Zentrum der ersten Oberfläche angeordnet sein und die Sensorelemente können auf einer Kreislinie um das Zentrum herum angeordnet sein. Die Sensorelemente können mit ihrer Längsachse tangential in Bezug auf das Aktorelement angeordnet sein. In einer Ausführungsart sind jeweils zwei Sensorelemente in Bezug auf das Aktorelement diametral gegenüberliegend angeordnet. Die Sensorelemente können auch Gruppen bilden, wobei alle Sensorelemente einer Gruppe jeweils denselben Abstand zu dem Aktorelement aufweisen. In einer Ausführungsart sind jeweils mindestens zwei Sensorelemente auf einem von dem Aktorelement ausgehenden Strahl hintereinander angeordnet. Durch Auswertung dieser beiden Sensorelemente kann beispielsweise die Strömungsgeschwindigkeit des Fluids in Strahlrichtung ermittelt werden. In einer Ausführungsart ist das Substrat scheibenförmig mit kreisrunder oder rechteckiger, insbesondere quadratischer Kontur.

Für die Ermittlung der Strömungsgeschwindigkeit können verschiedene aus dem Stand der Technik bekannte Verfahren eingesetzt werden. Beispielsweise kann es sich bei dem Aktorelement um ein Heizelement handeln, und zwei verteilt auf der ersten Oberfläche angeordnet Sensorelemente bestimmen lokal an ihrer Position jeweils die Temperatur, wobei auftretende Temperaturunterschiede eine Fluidströmung anzeigen und das Maß des aufgetretenen Temperaturunterschiedes unter Berücksichtigung der geometrischen Anordnung der Sensorelemente und des verwendeten Substrats hinsichtlich der Strömungsgeschwindigkeit und Strömungsrichtung ausgewertet werden kann. Entsprechende Verfahren sind auch unter dem Begriff Konstant-Temperaturmethode oder Time-of-Flight-Verfahren bekannt.

In einer Ausführungsart sind auf einem weiteren Substrat elektronische Bauelemente angeordnet, die im wesentlichen einer Signalverarbeitung und/oder einer Signalvorverarbeitung oder auch einer Ansteuerung des Aktorelements dienen können. Alternativ oder ergänzend ist auch möglich, derartige elektronische Bauelemente auf einer Rückseite des die Sensorelemente aufweisenden Substrates anzuordnen. Für den Fall, dass hierfür ein weiteres Substrat vorgesehen ist, wird dieses weitere Substrat vorzugsweise mit dem die Sensorelemente aufweisenden Substrat mechanisch fest verbunden. Hierzu kann das weitere Substrat auf seiner dem Substrat zugewandten ersten Oberfläche an den entsprechenden Positionen Kontaktflächen vorsehen, für ein elektrisches Kontaktieren der auf dem Substrat angeordneten Durchkontaktierungen. Auf diese Weise können die elektronischen Bauelemente auf dem weiteren Substrat mit dem Sensorelementen und/oder dem Aktorelement elektrisch verbunden werden. Sofern die elektronischen Bauelemente auf dem die Sensorelemente aufweisenden Substrat auf dessen Rückseite selbst angeordnet sind, können auch eine rückseitige Metallisierung oder anderweitige Leiterbahnen auf der Rückseite des Substrats vorgesehen sein.

In einer Ausführungsart bildet der Verbund aus Substrat und weiterem Substrat eine Kavität, die infolge der Verbindung zwischen den Substraten hermetisch gegenüber der Umgebung abgeschlossen sein kann. Innerhalb dieser Kavität kann mindestens ein Teil der elektronischen Bauelemente angeordnet sein, die auf diese Weise gegenüber rauen Umgebungsbedingungen geschützt sind.

In einer Ausführungsart weist das weitere Substrat ebenfalls Durchkontaktierungen zwischen zwei einander gegenüberliegenden Oberflächen auf. Insbesondere kann das weitere Substrat erste weitere Durchkontaktierungen aufweisen, die deckungsgleich mit den Durchkontaktierungen des die Sensorelemente aufweisenden Substrats sind.

Dadurch ist eine Kontaktierung der Sensorelemente oder des Aktorelements von der dem Substrat abgewandten zweiten Oberfläche des weiteren Substrats möglich. Alternativ oder ergänzend kann das weitere Substrat zweite weitere Durchkontaktierungen aufweisen, mittels denen die elektronischen Bauelemente kontaktiert werden können. Auf diese Weise ist ein Sensor bereitstellbar, dessen Aktorelemente und Sensorelemente unempfindlich gegenüber aggressiven Umgebungsbedingungen sind und/oder mit einer Passivierungsschicht hiergegen geschützt sind, und dessen elektronische Bauelemente im Innern eines Substratverbundes oder Sandwichaufbaus hermetisch geschützt sind.

In einer Ausführungsart sind an oder nahe dem Rand des Substrats auf beiden Oberflächen Sensorelemente angeordnet, mittels denen die Strömungsgeschwindigkeit rechtwinklig zur Oberfläche ermittelt werden kann. Das Aktorelement kann ebenfalls an oder nahe dem Rand des Substrats angeordnet sein, oder auch auf einer die beiden Oberflächen miteinander verbindenden Mantelfläche des Substrats. Hierzu können Sensorelemente eingesetzt werden, die bei der Vereinzelung der Substrate aus einem Nutzen durchtrennt werden und daher mit ihrer Trennfläche bündig mit der Mantelfläche des vereinzelten Substrates sind. Alternativ oder ergänzend können auch ein oder mehrere Sensorelemente auf der Mantelfläche angeordnet sein.

In einer Ausführungsart können auch weitere Sensoren an oder in dem Substrat angeordnet sein, beispielsweise ein Temperatursensor in der von einem Substratverbund gebildeten Kavität angeordnet sein, um die Umgebungstemperatur ohne Störeinflüsse durch die Fluidströmung zu messen. Die gemessene Umgebungstemperatur kann bei der Ansteuerung des Heizelements oder bei der Auswertung des Strömungssensors berücksichtigt werden.

Erfindungsgemäße Sensoren können auch zur Bestimmung von thermischen Materialparametern eingesetzt werden, beispielsweise zur Bestimmung der Wärmeleitfähigkeit oder der Wärmekapazität.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Aus Gründen der Darstellbarkeit weisen die Zeichnungen unterschiedliche Maßstäbe auf.
- Fig. 1: zeigt eine Draufsicht auf die erste Oberfläche eines Substrats eines mehrdimensionalen Fluidströmungssensors,
- Fig. 2: zeigt eine Draufsicht auf die zweite Oberfläche des Substrats der Fig. 1,
- Fig. 3: zeigt einen Schnitt durch das Substrat der Fig. 1 und 2,
- Fig. 4: zeigt eine Draufsicht auf eine erste Oberfläche eines weiteren Substrats,
- Fig. 5: zeigt eine Draufsicht auf eine zweite Oberfläche des weiteren Substrats der Fig. 4, und
- Fig. 6: zeigt einen Querschnitt durch einen Verbund aus einem Substrat und einem weiteren Substrat.

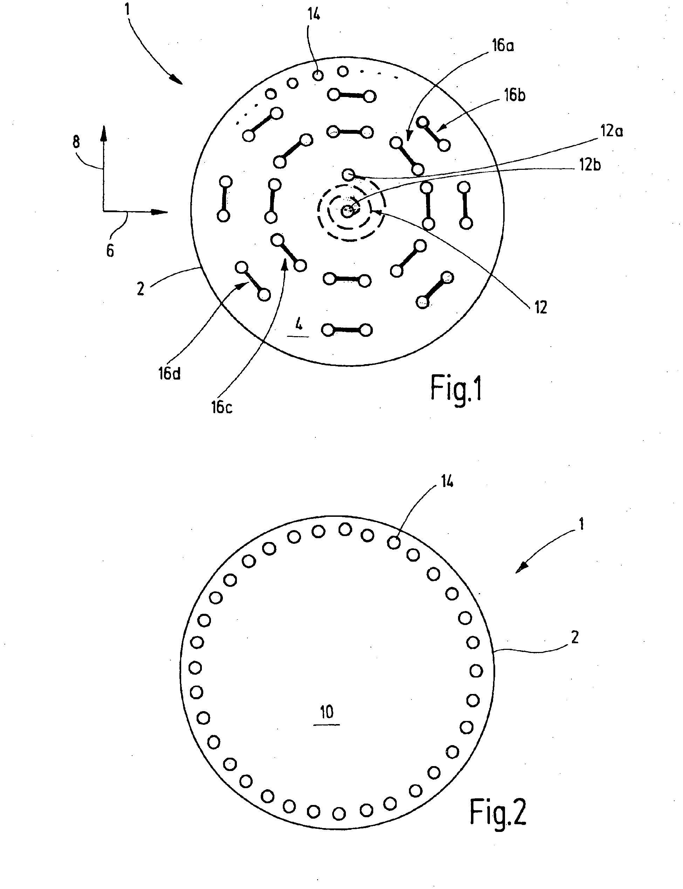

Die Fig. 1 zeigt eine Draufsicht auf die erste Oberfläche 4 eines Substrats 2 eines mehrdimensionalen Fluidströmungssensors 1 zum Ermitteln der Strömungsgeschwindigkeit eines Fluids in zwei oder mehr Raumrichtungen 6, 8, die im dargestellten Ausführungsbeispiel einen rechten Winkel einschließen und gemeinsam die erste Oberfläche 4 aufspannen. Bei dem Substrat 2 handelt es sich um eine kreisförmige Scheibe aus einem LTCC (Low Temperature Cofired Ceramics) Substrat mit zwei planparallelen Oberflächen 4, 10. Im Zentrum der ersten Oberfläche 4 ist als Aktorelement 12 eine gestrichelt dargestellte Heizspirale aus einem Widerstandsheizmaterial in Dünn- oder Dickschichttechnik aufgebracht. Das Aktorelement 12 hat zwei Anschlußelektroden 12a, 12b, die über nicht dargestellte Verbindungsleitungen jeweils zu mindestens einer nahe dem Rand des Substrats 2 angeordneten zugehörigen Durchkontaktierung 14 geführt sind.

Auf zwei im wesentlichen konzentrisch zu dem Zentrum der ersten Oberfläche 4 angeordneten Kreisen sind insgesamt 16 Sensorelemente 16a, 16b, 16c, 16d angeordnet, die ebenfalls jeweils über zwei Anschlußelektroden verfügen, die jeweils zu einer zugeordneten randnahen Durchkontaktierung 14 geführt sind. Auf jeder der beiden Kreislinien sind insgesamt 8 Sensorelemente 16a, 16c bzw. 16b, 16d mit im wesentlichen gleichem Abstand zu dem Aktorelement 12 angeordnet, und zwar mit ihrer Längsrichtung tangential in Bezug auf das durch das Aktorelement 12 gebildete Zentrum. Der Winkelabstand auf einer Kreislinie benachbart angeordneter Sensorelemente 16a, 16c bzw. 16b, 16d beträgt 45°.

Ausgehend von dem durch das Aktorelement 12 gebildeten Zentrum sind jeweils zwei Sensorelemente 16a, 16b bzw. 16c, 16d in Radialrichtung auf einem Strahl hintereinander angeordnet. Durch die Auswertung der an den Sensorelementen 16a bis 16d auftretenden Temperaturunterschiede kann die Strömungsgeschwindigkeit des Fluids im Bereich des Sensors 1 errechnet werden. Die dem Aktorelement 12 nahen Sensorelemente 16a, 16c sind dabei vorzugsweise im Bereich von 30 bis 70% des Abstandes zwischen dem durch das Aktorelement 12 gebildeten Zentrum und dem Rand des Substrats 12 angeordnet. Der radiale Abstand von zwei in Radialrichtung hintereinander angeordneten Sensorelementen 16a, 16b bzw. 16c, 16d beträgt ebenfalls etwa 30 bis 70% des Abstandes vom Zentrum zum Rand des Substrats 2.

Die Fig. 2 zeigt eine Draufsicht auf die zweite Oberfläche 10 des Substrats 2, mithin eine Rückansicht des Sensors 1. Durch die insgesamt 34 Durchkontaktierungen 14, zwei für jeden der 16 Sensorelemente 16a bis 16d plus zwei für das Aktorelement 12, ist von der Rückseite jedes Sensorelement und das Aktorelement individuell kontaktierbar. Bei den Durchkontaktierungen 14 handelt es sich um Durchgangslöcher durch das Substrat 2, die mit einer elektrisch leitfähigen Dickschichtpaste aufgefüllt sind.

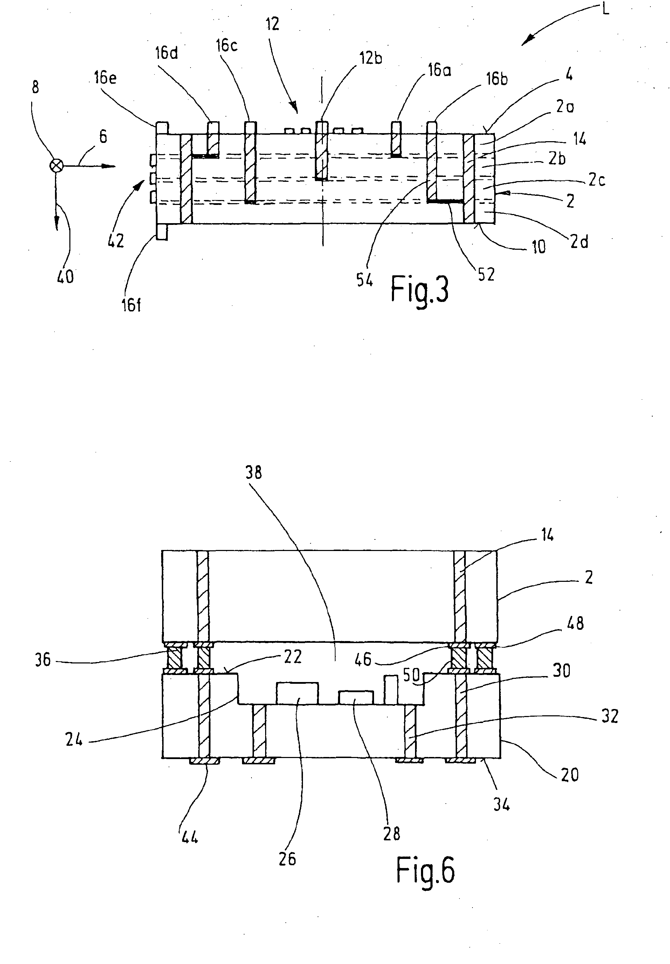

Die Fig. 3 zeigt einen Schnitt durch das Substrat 2 der Fig. 1 und 2. Das Substrat 2 ist aus insgesamt vier Lagen 2a, 2b, 2c und 2d zusammengesetzt, die auch als Folien oder Tapes bezeichnet werden, die im noch nicht gebrannten Zustand zugeschnitten oder gestanzt werden, insbesondere die Öffnungen für die Durchkontaktierungen 14 eingebracht werden. Anschließend werden auf diese Lagen 2a bis 2d Leiterbahnen 52 aufgebracht, insbesondere in Dickschichttechnik, beispielsweise strukturiert aufgedruckt, die Lagen 2a bis 2d zueinander ausgerichtet und übereinander gelegt und unter Druck und Temperatur laminiert. Abschließend erfolgt der Brenn- oder Sintervorgang. Die Dicke des Substrats beträgt in der Regel zwischen 0,25 und mehreren Millimetern. Die Dicke der einzelnen Lagen 2a bis 2d ist vorzugsweise identisch und beträgt 80 bis 400 µm, insbesondere 100 bis 250 *µ*m und vorzugsweise 120 bis 150 µm. Nach dem Brennen sind die Grenzen zwischen den einzelnen Schichten 2a bis 2d nicht mehr identifizierbar. Zwischen den Schichten 2a bis 2d verlaufen gegebenenfalls noch die Leiterbahnen 52, mittels denen die dem Aktorelement 12 oder den Sensorelementen 16a bis 16d zugeordneten Durchkontaktierungen 54 mit den randseitigen Durchkontaktierungen 14 und/oder miteinander verbunden sind. Dadurch ist in mindestens einer weiteren Ebene eine Verdrahtung möglich. Außerdem können auch passive Bauelemente wie Widerstände, Spulen oder Kondensatoren zwischen den Lagen 2a bis 2d realisiert werden.

Die Schichtdicke des Aktorelements 12, der Sensorelemente 16a bis 16d und der nicht dargestellten Leiterbahnen kann grundsätzlich zwischen Bruchteilen eines Mikrometers bis zu mehreren hundert Mikrometern betragen, wobei Aktorelement 12, Sensorelemente 16a bis 16d und Leiterbahnen auch unterschiedlich dick sein können. Vorzugsweise befinden sich auf der ersten Oberfläche 4 des Substrats 2 keine Leiterbahnen und das Aktorelement 12 und die Sensorelemente 16a bis 16d sind so gebildet, dass sich eine möglichst geringe Topographie auf der Oberfläche 4 ergibt, insbesondere möglichst dünn ausgeführt. Dabei spielt auch die Oberflächenrauhigkeit der ersten Oberfläche 4 eine Rolle. Wenn diese ausreichend gering ist, beispielsweise weniger als 2 µm beträgt, insbesondere weniger als 1 µm und insbesondere weniger als 0,4 µm, können das Aktorelement 12 und die Sensorelemente 16a bis 16d in Dünnschichttechnik (Schichtdicke kleiner als 1 bis 2 µm) aufgebracht sein.

Zur Bestimmung der Strömungsgeschwindigkeit in einer Richtung 40 rechtwinklig zu den Oberflächen 4, 10 ist auf der Mantelfläche ein weiteres Aktorelement 42 aufgebracht, insbesondere ein weiteres Heizelement.

In Umfangsrichtung zugeordnet zu dem weiteren Aktorelement 42 ist auf beiden Oberflächen 4, 10 jeweils mindestens ein Sensorelement 16e, 16f angeordnet, aus deren Messwerten die Strömungsgeschwindigkeit ermittelt wird.

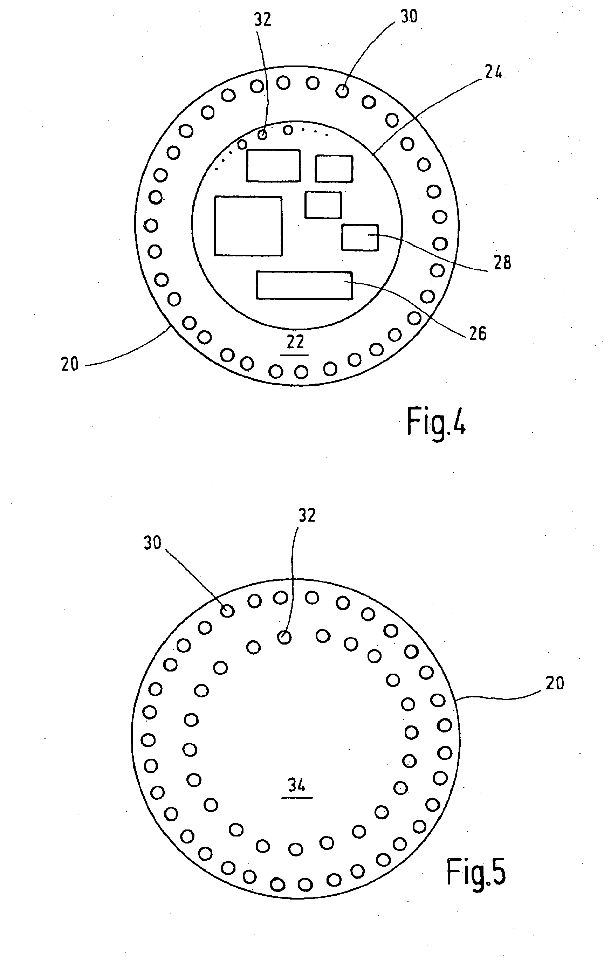

Die Fig. 4 zeigt eine Draufsicht auf eine erste Oberfläche 22 eines weiteren Substrats 20. In einem durch die Kreislinie 24 angedeuteten inneren Bereich sind elektronische Bauelemente 26, 28 angeordnet, beispielsweise ein integrierter Schaltkreis 26 zur Ansteuerung des Aktorelements 12 und ein Signalverstärker 28 für die Sensorelemente 16a bis 16d. Bei diesen Schaltkreisen 26, 28 kann es sich insbesondere um monolithisch integrierte Schaltkreise aus Silicium oder einem anderen Halbleitermaterial handeln, beispielsweise auch um handelsübliche Bauelemente, die auf die erste Oberfläche 22 aufgeklebt oder in sonstiger Weise auf der ersten Oberfläche 22 festgelegt sind. Über nicht dargestellte Leiterbahnen, die ebenfalls in Dünn- oder vorzugsweise Dickschichttechnik aufgebracht sind, sind die Bauelemente 26, 28 untereinander verbunden.

Das weitere Substrat 20 weist im randnahen Bereich weitere Durchkontaktierungen 30, 32 auf, die jedenfalls teilweise über nicht dargestellte Verbindungsleitungen, die ebenfalls in Dickschicht- oder Dünnschichttechnik auf dem weiteren Substrat 20 angeordnet sind, mit den elektronischen Bauelementen 26, 28 verbunden sind. Erste weitere Durchkontaktierungen 30 auf dem weiteren Substrat 20 sind im wesentlichen deckungsgleich mit den Durchkontaktierungen 14 des Substrats 2. Die elektronischen Bauelemente 26, 28 können über die ersten weiteren Durchkontaktierungen 30 mit dem Aktorelement 12 und/oder den Sensorelementen 16a bis 16d elektrisch verbunden sein. Beabstandet von den ersten weiteren Durchkontaktierungen 30, insbesondere vom Rand weiter nach innen beabstandet, weist das weitere Substrat 20 zweite weitere Durchkontaktierungen 32 auf, mittels denen die elektronischen Bauelemente 26, 28 von der in der Fig. 5 in der Draufsicht dargestellten zweiten Oberfläche 34 kontaktiert werden können, ebenso wie das Aktorelement 12 und die Sensorelemente 16a bis 16d über die ersten weiteren Durchkontaktierungen 30.

Die Fig. 6 zeigt einen Querschnitt durch einen Verbund aus dem Substrat 2 und dem weiteren Substrat 20, wobei aus diesem Querschnitt ersichtlich ist, dass die elektronischen Bauelemente 26, 28 in einem gegenüber der ersten Oberfläche 22 vertieft liegenden Bereich angeordnet sind. Durch den Verbund der beiden Substrate 2, 20 ist durch den vertieft liegenden Bereich eine Kavität 38 gebildet, innerhalb der die elektronischen Bauelemente 26, 28 mechanisch geschützt sind. Soweit die Verbindungsschicht 36, mit der das Substrat 2 mit dem weiteren Substrat 20 verbunden ist, fluiddicht ist, sind die elektronischen Bauelemente 26, 28 auch hermetisch dicht gekapselt. Ein durch einen solchen Verbund gebildeter Sensor kann auch unter extremen Umgebungsbedingungen, insbesondere hohen Drücken und/oder aggressiven Medien, eine dauerhaft hohe Meßgenauigkeit gewährleisten.

Auf der zweiten Oberfläche 34 des weiteren Substrats 20 sind den weiteren Durchkontaktierungen zugeordnete Kontaktpads 44 angebracht, die eine elektrische Kontaktierung ermöglichen, beispielsweise durch Drahtbonden oder Anlöten von Anschlussleitungen. Auch die zweite Oberfläche 10 des Substrats 2 weist solche, den Durchkontaktierungen 14 zugeordnete Kontaktpads 46 auf, ebenso wie die erste Oberfläche 22 des weiteren Substrats 20; die einander zugeordneten Kontaktpads 46 sind durch ein elektrisch leitfähiges Verbindungsmittel 50 miteinander elektrisch verbunden.

Vorzugsweise radial außenseitig ist ein Verbindungsrahmen 48 auf die zweite Oberfläche 10 des Substrats 2 und auf die erste Oberfläche 22 des weiteren Substrats 20 aufgebracht, auf welche die Verbindungsschicht 36 aufgebracht ist, durch welche das Substrat 2 mit dem weiteren Substrat 20 mechanisch fest und vorzugsweise fluiddicht verbunden ist. Dabei kann die Verbindungsschicht 36 und das Verbindungsmittel 50 aus dem gleichen Werkstoff gebildet sein, beispielsweise aus einem Lot. Die Kontaktpads 46 und der Verbindungsrahmen 48 können ebenfalls aus demselben Werkstoff gebildet sein und darüber hinaus auch noch in einem Arbeitsgang auf das Substrat 2 und/oder das weitere Substrat 20 aufgebracht sein, beispielsweise in Dickschichttechnik durch Aufdrucken; die Schichtdicke beträgt typisch zwischen 3 und 50 µm, insbesondere zwischen 5 und 25 µm und vorzugsweise zwischen 8 und 15 µm. Die Schichtdicke der Verbindungsschicht 36 beträgt typisch zwischen 20 und 400 µm, insbesondere zwischen 50 und 200 µm, und vorzugsweise zwischen 80 und 150 µm. Die Schichtdicken der Substrate 2, 20 und der darauf angebrachten Schichten und Komponenten sind aus Gründen der besseren Darstellbarkeit nicht maßstabgetreu wiedergegeben.

## Patentansprüche

1. Mehrdimensionaler Fluidströmungssensor (1) zum Ermitteln der Strömungsgeschwindigkeit eines Fluids in zwei oder mehr Raumrichtungen (6, 8), wobei der Fluidströmungssensor (1) auf einer ersten Oberfläche (4) eines Substrats (2) mindestens ein Aktorelement (12), insbesondere ein elektrisches Heizelement, sowie mehrere auf der ersten Oberfläche (4) verteilt angeordnete und in Dünn- oder Dickschichttechnik auf dem Substrat aufgebrachte Sensorelemente (16a bis 16d), insbesondere Messwiderstände, aufweist, und wobei mindestens ein Teil der elektrischen Anschlüsse (12a,b) des Aktorelements (12) und/oder der Sensorelemente (16a bis 16d) über durch das Substrat (2) hindurchtretende und elektrisch leitfähige Durchkontaktierungen (14) von der ersten Oberfläche (4) zu Kontaktflächen (14a) auf einer zweite Oberfläche (10) des Substrats (2) durchkontaktiert ist.

2. Mehrdimensionaler Fluidströmungssensor (1) nach Anspruch 1, **dadurch gekennzeichnet, dass** die Durchkontaktierungen (14) fluiddicht sind und ein Durchtritt des Fluids von der ersten Oberfläche (4) auf die zweite Oberfläche (10) des Substrats (2) durch die Durchkontaktierungen (14) hindurch verhindert ist.

3. Mehrdimensionaler Fluidströmungssensor (1) nach Anspruch 1 oder 2, **dadurch gekennzeichnet, dass** die Durchkontaktierungen (14) auf der ersten Oberfläche (4) zwischen dem Aktorelement (12) und einem Rand des Substrats (2) angeordnet sind.

4. Mehrdimensionaler Fluidströmungssensor (1) nach einem der Ansprüche 1 bis 3, **dadurch gekennzeichnet, dass** auf der ersten Oberfläche (4) Verbindungsleitungen in Dick- oder Dünnschichttechnik aufgebracht sind, mittels denen das Aktorelement (12) und/oder mindestens ein Teil der Sensorelemente (16a bis 16d) mit den Durchkontaktierungen (14) elektrisch verbunden ist.

5. Mehrdimensionaler Fluidströmungssensor (1) nach einem der Ansprüche 1 bis 4, **dadurch gekennzeichnet, dass** auf der ersten Oberfläche (4) die Sensorelemente (16a bis 16d) um das Aktorelement (12) herum angeordnet sind, insbesondere dass die Sensorelemente (16a bis 16d) mit gleichem Winkelabstand um das Aktorelement (12) herum angeordnet sind.

6. Mehrdimensionaler Fluidströmungssensor (1) nach einem der Ansprüche 1 bis 5, **dadurch gekennzeichnet, dass** auf der ersten Oberfläche (4) die Sensorelemente (16a bis 16d) strahlenförmig um das Aktorelement (12) herum angeordnet sind, wobei das Aktorelement (12) im Zentrum des Strahlenbündels angeordnet ist, und dass die Sensorelemente (16a bis 16d) mindestens eine Gruppe bilden, wobei alle Sensorelemente (16a bis 16d) einer Gruppe denselben Abstand zu dem Aktorelement (12) aufweisen.

7. Mehrdimensionaler Fluidströmungssensor (1) nach Anspruch 6, **dadurch gekennzeichnet, dass** jeweils mindestens zwei Sensorelemente (16a bis 16d) auf einem Strahl hintereinander angeordnet sind.

8. Mehrdimensionaler Fluidströmungssensor (1) nach einem der Ansprüche 1 bis 7, **dadurch gekennzeichnet, dass** auf einem weiteren Substrat (20) elektronische Bauelemente (26, 28) angeordnet sind, und dass das weitere Substrat (20) mit dem die Sensorelemente (16a bis 16d) aufweisenden Substrat (2) mechanisch fest verbunden ist.

9. Mehrdimensionaler Fluidströmungssensor (1) nach Anspruch 8, **dadurch gekennzeichnet, dass** der Verbund aus Substrat (2) und weiterem Substrat (20) eine Kavität (38) bildet, und dass mindestens ein Teil der elektronischen Bauelemente (26, 28) innerhalb der Kavität (38) angeordnet ist.

10. Mehrdimensionaler Fluidströmungssensor (1) nach einem der Ansprüche 1 bis 9, **dadurch gekennzeichnet, dass** das weitere Substrat (20) weitere Durchkontaktierungen (30, 32) aufweist für ein elektrisches Durchkontaktieren von einer dem Substrat (2) zugewandten ersten Oberfläche (22) des weiteren Substrats (20) zu einer dem Substrat (2) abgewandten zweiten Oberfläche (34) des weiteren Substrats (20).
